# FASCICULE DE BREVET EUROPEEN

(11) **EP 2 615 156 B1**
(45) Date de publication et mention de la délivrance du brevet: **30.12.2020**
(21) Numéro de dépôt: 13151077.8
(22) Date de dépôt: 11.01.2013
(51) Int. Cl.: C10L 5/44, C10L 5/48

(54) **Composition de biocombustible et procede de fabrication d'un biocombustible**
Biokraftstoffzusammensetzung und Herstellungsverfahren eines Biokraftstoffs
Biofuel composition and method for manufacturing a biofuel

(30) Priorité: 12.01.2012 FR 1250325
(43) Date de publication de la demande: 17.07.2013
(73) Titulaire: Europeenne de Biomasse, 75009 Paris (FR)
(72) Inventeur: Marin, Jean-baptiste, 75004 PARIS (FR); Monnier, Sophie, 75009 PARIS (FR)
(74) Mandataire: Ermeneux, Bertrand

(56) Documents cités:
- EP-A1- 0 055 790
- EP-A1- 1 541 533
- WO-A1-99/51710
- US-A1- 2002 148 388
- US-A1- 2010 281 767
- US-A1- 2010 300 368

## Description

L'invention a trait à une composition d'un biocombustible, notamment pour centrales thermiques.

L'invention concerne également un procédé de fabrication d'un tel biocombustible, en particulier sous forme de granulés ou pellets.

On connaît déjà, dans l'art antérieur, plusieurs conceptions de granulés compressés à partir de biomasse employés comme combustible.

Le document WO 2006/081645 (Zannoni) décrit un procédé comprenant un séchage à l'air chaud de résidus de biomasse, un raffinage des résidus de biomasse séchés et une extrusion dans une granuleuse pour former des granulés ayant une densité comprise entre 550 et 750 kg/m³.

Le document WO 2011/131869 (Zeta) décrit un procédé de fabrication de granulés à partir de résidus de biomasse humide ayant un taux d'humidité compris entre 25% et 80%, ce procédé comprenant un séchage des résidus de biomasse simultanément au pastillage à une température comprise entre 65 et 95°C.

Les granulés compressés ou pellets connus dans l'art antérieur présentent une grande variété de composition, illustrées par exemple par les documents WO 2009/147361 (Solsys), EP 55790 (Catan), NL 2000224 (Leer), FR 2578551 (Soulié), WO 1986/06091 (Cole).

Le document US-A1-2010/300368 décrit des granulés ou des briquettes pour centrale thermique composés de 85% de poudre de charbon et de 15% de bois séché, de chaume de soja et/ou d'herbe.

Le document FR 2904325 (Gontard) mentionne la réalisation de granulés compressés constitués de produits secondaires obtenus au cours de la mouture de céréales, principalement du blé, ces granulés étant utilisés pour le chauffage de maisons individuelles. Les granulés sont cylindriques d'un diamètre de 6 mm et d'une longueur de 20 mm et l'alimentation des chaudières est effectuée manuellement ou par vis directement dans le foyer à partir d'un silo de stockage. Le document FR 2904325 ne décrit pas de procédé de fabrication pour ces granulés, indiquant uniquement que la compression est effectuée sans liant, à l'aide de presses à granuler utilisées pour l'alimentation animale.

Le document FR 2864831 (Morselli) mentionne la fabrication d'un combustible solide résultant du traitement de la biomasse végétale, ce combustible se présentant sous forme de boulets, bûches ou briquettes et étant moulé, sans chauffage ni utilisation de liant. Ce combustible est présenté comme pouvant se substituer au charbon pour la production de pointe dans les centrales thermiques. Ce combustible dénommé « bois des villes » est élaboré à partir de trois catégories de produits : les matières fibreuses, les matières pâteuses, les matières ligneuses. À titre d'exemple, les matières fibreuses sont issues des plantes sauvages (chardons, orties, roseaux, bambous, iris, mauvaises herbes) et proviennent notamment de l'entretien des talus et fossés, radiers, canaux d'irrigation, plans d'eau, parcs et jardins publics, bords de route, terrain de sport. Les matières fibreuses sont également issues de plantes cultivées (fibres de noix de coco, déchets d'ananas, pelures de mangues, feuilles de poireau, tiges de choux) et proviennent notamment des maraîchers, des fleuristes ou des pépinières. Les matières pâteuses comprennent les cartons, les fruits, légumes et produits alimentaires, le terreau et le compost, et sont issues notamment des déchets de restauration. Les matières ligneuses sont issues du concassage de bois de toute origine (planches de bois de chantier, tailles de haies, cageots de fruits). Les matières fibreuses et pâteuses sont obtenues par broyage, à l'aide d'un broyeur malaxeur du type employé dans la fabrication de nourriture pour animaux. Les matières ligneuses sont obtenues par broyage ou concassage afin d'obtenir des morceaux de 1 cm de côté au maximum. Après mélange des produits pâteux et fibreux, les matières ligneuses sont ajoutées et la pâte obtenue est moulée sous pression sous forme de boulets de la taille d'un citron ou d'un pamplemousse, de buches ou de briquettes, les proportions idéales étant de 50% de matières pâteuses, 10% de matières fibreuses et 40% de matière ligneuses. Le combustible décrit dans le document FR 2864831 présente une grande variabilité de composition et sa combustion peut générer des éléments potentiellement nocifs pour l'environnement, de sorte que ce combustible ne peut pas, en pratique, se substituer sans risques au charbon dans les centrales thermiques.

D'autres exemples de granulés biocombustibles sont décrits dans les documents suivants : Agro pellets for domestic heating boilers, Applied Energy, February 2012, pp. 17-23 *;* Pellet production from agricultural raw materials, Biomass and Bioenergy, january 2011, pp. 679-689*,* Mechanical durability and combustion characteristics of pellets from biomass, Bioresource Technology, November 2010, pp. 8859-8867*.*

Un premier objet de l'invention est de fournir un biocombustible pouvant être employé dans une large gamme de centrales thermiques conventionnelles, sans nécessiter de travaux sur ces centrales.

Un autre objet de l'invention est de fournir un biocombustible possédant une densité énergétique proche de celle du charbon.

Un autre objet de l'invention est de fournir un biocombustible, notamment pour centrales thermiques, permettant de baisser les émissions de gaz à effet de serre de ces centrales, lors de leur fonctionnement, et ce jusqu'à 70%.

Un autre objet de l'invention est de fournir un biocombustible pour centrale thermiques permettant de baisser les émissions de gaz à effet de serre de ces centrales, lors de leur fonctionnement, tout en respectant les valeurs d'émissions de SO₂, NO_{X}, CO.

Un autre objet de l'invention est de fournir un biocombustible disponible sur le long terme, à prix indexé.

Un autre objet de l'invention est de fournir un biocombustible à prix de revient compétitif vis-à-vis du charbon.

A ces fins, l'invention se rapporte, selon un premier aspect, à un biocombustible comprenant des issues de produits agricoles et un combustible fossile. Ce biocombustible se présente en pellets comprenant jusqu'à 30% en poids de charbon et entre 60% et 70% en poids d'un mélange d'au moins deux issues de produits agricoles provenant des opérations de triage et/ou calibrage et/ou tamisage de céréales et/ou oléagineux et/ou protéagineux.

Par « issues de produits agricoles » sont désignés des produits des opérations de triage, calibrage et tamisage de productions agricoles, lesdites issues étant des glumes, des glumelles, des siliques, des feuilles, des tiges, ou des rafles, ces produits étant avantageusement à l'état naturel, c'est-à-dire ni imprégnés, ni revêtus d'une substance quelconque.

Dans le cadre de l'invention, les pellets de biocombustibles peuvent être sensiblement cylindriques ou sphériques, ou de toute autre forme appropriée connue.

Selon diverses mises en œuvre, le biocombustible présente les caractères suivants, le cas échéants combinés
- Les pellets sont cylindriques ;
- les pellets ont un diamètre compris entre 4 et 15 mm ;
- les pellets ont une longueur comprise entre 10 et 40 mm ;
- les pellets présentent une densité comprise entre 350 et 650 Kg/m³ ;
- les pellets présentent un taux d'humidité compris entre 5 et 15% ;
- le biocombustible présente un pouvoir calorifique inférieur sur brut de l'ordre de 6MW.h/T ;
- le biocombustible comprend en outre moins de 15% en poids de biomasse végétale ;
- la biomasse végétale comprend au mois un élément choisi dans le groupe comprenant les bois, pépins, grignons d'olive, pailles, miscanthus ;
- les pellets sont revêtus d'un agent anti poussières volantes ;
- l'agent anti poussières volants est une huile.

L'invention se rapporte, selon un deuxième aspect, à un procédé de fabrication d'un tel biocombustible se présentant en pellets comprenant jusqu'à 30% en poids de charbon et entre 60 et 70% en poids d'un mélange d'au moins deux issues de produits agricoles provenant des opérations de triage et/ou calibrage et/ou tamisage de céréales et/ou oléagineux et/ou protéagineux, le procédé comprenant avant l'étape de granulation, une première phase de mélange, suivie d'un broyage et d'une deuxième phase de mélange.

Le procédé présente, selon diverses réalisations, les caractères suivants, le cas échéant combinés :
- après l'étape de granulation intervient une phase de refroidissement;
- le procédé comprend une phase de projection d'un agent anti poussières volantes ;
- l'agent anti poussières volantes est une huile ;
- l'agent anti poussières volantes est projeté sur les pellets avant leur refroidissement.

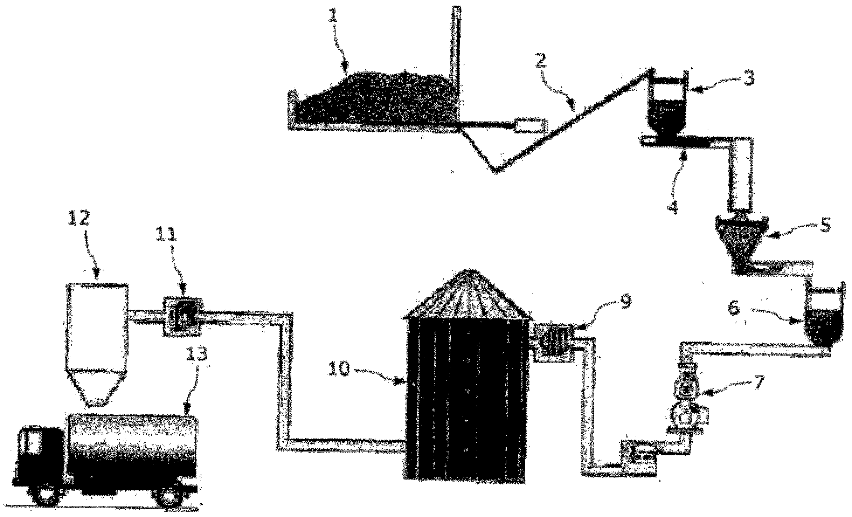

D'autres objets et avantages de l'invention apparaîtront à la lumière de la description suivante de modes de réalisation, description qui va être effectuée en se référant à la figure annexée qui représente schématiquement différentes étapes d'un procédé de fabrication de pellets.

Dans le cadre de l'invention, l'oléagineux est le tournesol, et le protéagineux est le colza.

Le biocombustible selon l'invention trouve utilisation avantageuse en alimentation des centrales thermiques à charbon conventionnelle, sans nécessiter de travaux d'aménagement de ces centrales.

Il est estimé que les centrales thermiques alimentées au gaz naturel et au charbon représentent à elles seules 40% des émissions mondiales de dioxyde de carbone d'origine anthropogénique.

Divers procédés ont été mis en œuvre pour réduire les gaz à effet de serre émis par ces centrales, comme par exemple :
- le lavage des, fumées en post combustion par absorption chimique à l'aide d'un solvant liquide de type amine (par exemple monoéthylamine, méthyldiéthanaolamine, diglycolamine), ou absorption physique (par exemple à l'aide d'un solvant physique tel que dimethyléther de polyethylène glycol, N-methyl pyrrolidone, méthanol), ces procédés s'avérant complexes et onéreux, l'utilisation d'amines entraînant par ailleurs des phénomènes de corrosion et la régénération des solvants entraîne une consommation d'énergie affectant le rendement de la centrale ;
- la décarbonatation du combustible et captage du dioxyde de carbone en pré combustion ;
- la séparation membranaire à l'aide de membranes organiques (polysulphones, polyamides) ou inorganiques, ces procédés étant également complexes et couteux.

Les centrales thermiques conventionnelles alimentées au charbon sont de divers types : notamment charbon pulvérisé, lit fluidisé circulant, cycle combiné et gazéification intégrée. Dans la conception du type chaudière à lit fluidisé circulant, le charbon n'est pas pulvérisé mais brûlé dans un lit de particules solides maintenu en suspension par un courant d'air. Dans la conception de type cycle combiné et gazéification intégrée, un gazéificateur réalise une combustion partielle du charbon à l'oxygène.

Le biocombustible comprend deux composants :
- mélange d'au moins deux issues (céréales, oléagineux ou protéagineux) ;
- du charbon.

Par « issues », sont désignés ici les produits provenant des opérations de triage, calibrage, tamisage de produits agricoles, lesdites issues étant des glumes, glumelles, siliques, feuilles, tiges, rafles, par exemple issues de blé, d'orge, de maïs, de tournesol, farine de colza.

Dans certaines réalisations, le biocombustible comprend en outre une biomasse végétale, notamment bois, pépins, grignons d'olive, paille, miscanthus.

Le terme « bois » désigne ici notamment les plaquettes de bois obtenues par déchiquetage, le BRF (bois raméal fragmenté), les sciures de bois.

Dans certaines mises en œuvre :
- 60 à 70% en poids du biocombustible est formé par un mélange d'au moins deux issues, par exemple issues de blé, maïs, orge, avoine, colza, tournesol ;
- moins de 10% en poids du biocombustible est formé par une biomasse végétale ;
- 30% en poids du biocombustible est formé par du charbon,

Dans une première étape, les composants du biocombustible (mélange d'issues, charbon et le cas échéant biomasse végétale) sont chargés dans une chargeuse peseuse 1. Les composants sont amenés, par un convoyeur 2, vers une mélangeuse 3. Après passage dans un régulateur de débit 4, le mélange est introduit dans un broyeur affineur 5. En sortie de broyeur affineur, le mélange est introduit dans une deuxième mélangeuse 6. En sortie de la deuxième mélangeuse 6, le produit est introduit dans un granulateur 7.

Un refroidissement du produit est effectué en sortie du granulateur 7 avant introduction dans un tamiseur 9 et stockage en silo 10.

La sortie de mélange du stockage en silo 10 est réalisée par passage dans un tamiseur 11 et mise dans un boisseau 12 avant entrée dans un camion 13.

Le granulé ou pellet est ainsi obtenu après broyage (par exemple broyeur à marteaux), compression et tamisage, sans traitement thermique ou chimique, et sans séchage, les issues étant toutefois avantageusement séchées au soleil.

Aucun liant n'est utilisé, mais un liant à base d'amidon ou de mélasse peut être employé.

Avantageusement, une analyse complète des intrants est réalisée toutes les trois mille tonnes
- humidité totale, typiquement de l'ordre de 8.7%,
- cendres sur sec à 815°C,
- matières volatiles sur sec,
- PCS sur sec (en MJ/Kg, KW/Kg),
- PCI sur brut (calcul en MJ/Kg, KW/Kg), typiquement de l'ordre de 6000 KWh,
- carbone sec,
- hydrogène, azote, soufre, chlore, phosphore, oxygène sur sec, typiquement de l'ordre de moins de 0,1% de chlore, 0,25% de soufre, 0,25% d'azote et 1,41% d'hydrogène, ces données étant fournies à titre indicatif,
- analyse des cendres à 815°C,
- analyse des cendres : SiO₂, Al₂O₃, Fe₂O₃, CaO, SO₃, Na₂0, K₂O, MgO, P₂O₅, Mn₂O₃, TiO₂,
- fusibilité des cendres en atmosphère réductrice,
- courbe de fusibilité.

Avantageusement, une analyse complète des intrants et des métaux lourds est effectuée chaque semestre ou toutes les dix mille tonnes phosphore, arsenic, mercure, cadmium, chrome, cuivre, plomb, zinc, vanadium.

Avantageusement, un suivi de la teneur en potassium dans les cendres est effectué.

Avantageusement, un contrôle de la résistance mécanique des granulés est effectué : durabilité du granulé par rapport aux chocs.

Avantageusement, une fiche de données de sécurité est établie selon 1907/2006/CE, article 31.

Si les résultats des analyses sont stables, les essais sont espacés.

Avantageusement, un agent réducteur d'émission atmosphérique est ajouté.

Avantageusement, un traitement anti poussières volantes est effectué.

Le biocombustible peut être employé pour des types de centrales thermiques et chaudières très différentes, telles que par exemple :
- chaudière à grille vibrante, typiquement d'une capacité de 20 000 tonnes/an ;
- spreader stocker d'une capacité de 35 000 tonnes par an ;
- lit fluidisé circulant d'une capacité de 40 000 tonnes par an ;
- chaudière automatique à grille d'une capacité de 1500 tonnes par an;
- chaudière à foyer volcan, d'une capacité de 1000 tonnes par an.

Plusieurs exemples d'utilisation d'un biocombustible selon l'invention vont maintenant être décrits.

Selon un premier exemple, 300 tonnes de biocombustible sous forme de pellets de diamètre 6 mm sont employés pour l'alimentation d'une chaudière à combustible solide, à lit fluidisé circulant (LFC), d'une puissance de 32 MW, avec un volume de foyer de 185m³. Le PCIᵥₒₗᵤₘₑ du biocombustible est d'environ de 3100 KW.h/m³.

Les propriétés du biocombustible sont les suivantes :

| | |
|---|---|
| Humidité totale | 6.0 |
| Cendres /brut | 6.0 à 7.0 |
| Carbone/brut (%) | 53.5 |
| Matières volatiles/brut | 56 à 61 |
| PCI/brut en KWh/Kg | 5800 |
| Oxygène/brut (%) | 26.96 |
| Soufre/brut (%) | 0.80 |
| Hydrogène/brut (%) | 5.50 |
| Azote/brut (%) | 2.03 |
| Chlore/brut (%) | 0.34 |
| Énergie renouvelable (%) | 55.2 |
| Densité (Kg/m³) | 530 |

La température du lit est d'environ 850°C et le biocombustible se classe, pour son comportement au feu, dans la catégorie d'un combustible flambant sec, avec des teneurs en matières volatiles supérieures à 50%.

Les cendres obtenues sont classées dans la catégorie fusible, à forte teneur en chaux, La composition chimique des cendres est la suivante (moyenne en %) :

| | |
|---|---|
| SiO₂ | 37.5 |
| Al₂O₃ | 7.5 |
| Fe₂O₃ | 7.1 |
| C a O | 14.3 |
| M g O | 3.2 |
| Na₂O | 2.0 |
| K₂O | 10.5 |
| TiO₂ | 0.67 |
| P₂O₅ | 3.4 |
| SO₃ | 4.9 |

Le rendement instantané sur PCI est de 88,5%.

Les fumées en sortie de chaudière présentent les propriétés suivantes :
- température : 167,3°C
- teneur en CO : 44 ppm
- teneur en O₂ : 6,9%
- teneur en SO₂ : 52,9mg/Nm³
- teneur en NO : 31,2 mg/Nm³

L'alimentation de la chaudière de type LFC en biocombustible selon l'invention ne nécessite aucune adaptation de la chaudière, l'excès d'air est maintenu au minimum, afin de maintenir une combustion fumivore et une faible émission de CO.

Selon un deuxième exemple, 25 tonnes de biocombustible sous forme de pellets sont employés pour l'alimentation d'une chaudière au charbon d'une puissance de 6400 KW, à grille mécanique vibrante de 6,4 m², avec une charge de l'ordre de 4 à 4,5 t/h.

Le fonctionnement de la chaudière s'avère satisfaisant, sans macheférisation. Le rendement instantané sur PCI est de 85%.

Selon un troisième exemple, 200 tonnes de biocombustible sous forme de pellets de diamètre 8 mm sont employés pour l'alimentation d'un évaporateur à charbon, d'une puissance de 30 MW, avec une surface de grille de 30 m².

Les propriétés du biocombustible sont les suivantes :

| | |
|---|---|
| Humidité totale | 6.0 |
| Cendres /brut | 4.0 à 8.0 |
| Carbone/brut (%) | 52,5 |
| Matières volatiles/brut | 54 à 64 |
| PCI/brut en KWh/Kg | 5700 |
| Oxygène/brut (%) | 26.4 |
| Soufre/brut %) | 0.30 |
| Hydrogène/brut (%) | 5.3 |
| Azote/brut (%) | 1.4 |
| Chlore/brut (%) | 0.2 |
| Energie renouvelable (%) | 55 |
| Densité (Kg/m³) | 600 à 650 |

La composition chimique des cendres est la suivante (moyenne en %)

| | |
|---|---|
| SiO₂ | 36.2 |
| Al₂O₃ | 6.8 |
| Fe₂O₃ | 5.1 |
| CaO | 18.6 |
| MgO | 4.0 |
| Na₂O | 1.7 |
| K₂O | 9.3 |
| TiO₂ | 0.47 |
| P₂O₅ | 6.8 |
| SO₃ | 2.7 |

Selon un quatrième exemple, 25 tonnes de biocombustible sont employés pour l'alimentation d'une chaudière au charbon à foyer volcan, d'une puissance de 1160 KW. Le biocombustible se présente sous forme de granulés d'un diamètre 12mm, de densité de l'ordre de 620 Kg/m³. Le rendement instantané sur PCI est de l'ordre de 82,6%.

Selon un cinquième exemple, 300 tonnes de biocombustible sont employés pour l'alimentation d'une chaufferie à foyer de type spreader. Le combustible se présente sous forme de granulés d'un diamètre de 8mm. Le rendement instantané sur PCI est de l'ordre de 86,6%.

Le biocombustible qui vient d'être décrit garanti plus de 50% d'énergie renouvelable et est conçu comme un substitut au charbon.

Il est entre autres destiné aux centrales en zone urbaine, fournissant une source d'un substitut au charbon, éligible aux dispositions préservant l'environnement, ce substitut étant approvisionné durablement aux centrales et ne nécessitant pas de changement majeur dans les installations de ces centrales.

L'invention s'inscrit dans le cadre du règlement CE 800/2008 et de la directive 2009/28 et des schémas régionaux d'énergie renouvelable prévus par la loi 2009-967 du 3 août 2009.

## Revendications

1. Biocombustible, **caractérisé en ce qu'**il se présente sous forme de pellets comprenant jusqu'à 30% en poids de charbon et entre 60 et 70% en poids d'un mélange d'au moins deux issues de produits agricoles provenant des opérations de triage et/ou calibrage et/ou tamisage de céréales et/ou de tournesol et/ou de colza, lesdites issues étant des glumes, des glumelles, des siliques, des feuilles, des tiges, ou des rafles.

2. Biocombustible selon la revendication 1, **caractérisé en ce que** lesdits pellets sont cylindriques et de longueur comprise entre 10 et 40 mm.

3. Biocombustible selon la revendication 2, **caractérisé en ce que** les pellets ont un diamètre compris entre 4 et 15 mm.

4. Biocombustible selon l'une quelconque des revendications 1 à 3, **caractérisé en ce que** les pellets présentent une densité comprise entre 350 et 650 Kg/m3.

5. Biocombustible selon l'une quelconque des revendications 1 à 4, **caractérisé en ce que** les pellets présentent un taux d'humidité compris entre 5 et 15%.

6. Biocombustible selon l'une quelconque des revendications 1 à 5, **caractérisé en ce qu'**il comprend en outre une biomasse végétale constituée de bois, de pépins, de grignons d'olive, de pailles, et/ou de miscanthus, représentant moins de 15% en poids dudit biocombustible.

7. Biocombustible selon l'une quelconque des revendications 1 à 6, caractérisé en ce les pellets sont revêtus d'une huile formant un agent anti poussières volantes.

8. Procédé de fabrication d'un biocombustible se présentant en pellets comprenant jusqu'à 30% en poids de charbon et entre 60 et 70% en poids d'un mélange d'au moins deux issues de produits agricoles provenant des opérations de triage et/ou calibrage et/ou tamisage de céréales et/ou de tournesol et/ou de colza, lesdites issues étant des glumes, des glumelles, des siliques, des feuilles, des tiges, ou des rafles, le procédé étant **caractérisé en ce qu'**il comprend avant l'étape de granulation, une première phase de mélange, suivie d'un broyage et d'une deuxième phase de mélange.

9. Procédé selon la revendication 8, **caractérisé en ce qu'**il comprend, après l'étape de granulation, une phase de refroidissement.

10. Procédé selon la revendication 8 ou la revendication 9, **caractérisé en ce qu'**il comprend une phase de projection d'un agent anti poussières volantes.

11. Procédé selon la revendication 10, **caractérisé en ce que** l'agent anti poussières volantes est une huile.

12. Procédé selon la revendication 10 ou 11, **caractérisé en ce que** l'agent anti poussières volantes est projeté sur les pellets avant leur refroidissement.

## Patentansprüche

1. Biobrennstoff, **dadurch gekennzeichnet, dass** er in Form von Pellets vorliegt, umfassend bis zu 30 Gew.-% Kohle und zwischen 60 und 70 Gew.-% eines Gemischs aus mindestens zwei landwirtschaftlicher Zwischenprodukte, die aus Sortier- und/oder Kalibrier- und/oder Siebvorgängen von Getreiden und/oder von Sonnenblume und/oder von Raps hervorgegangen sind, wobei die Zwischenprodukte Spelzengewebe, Spelzen, Schoten, Blätter, Stiele oder Spindeln sind.

2. Biobrennstoff nach Anspruch 1, **dadurch gekennzeichnet, dass** die Pellets zylindrisch und zwischen 10 und 40 mm lang sind.

3. Biobrennstoff nach Anspruch 2, **dadurch gekennzeichnet, dass** die Pellets einen Durchmesser zwischen 4 und 15 mm haben.

4. Biobrennstoff nach einem der Ansprüche 1 bis 3, **dadurch gekennzeichnet, dass** die Pellets eine Dichte zwischen 350 und 650 kg/m³ aufweisen.

5. Biobrennstoff nach einem der Ansprüche 1 bis 4, **dadurch gekennzeichnet, dass** die Pellets einen Feuchtigkeitsgehalt zwischen 5 und 15 % aufweisen.

6. Biobrennstoff nach einem der Ansprüche 1 bis 5, **dadurch gekennzeichnet, dass** er ferner eine pflanzliche Biomasse aufweist, die aus Holz, Kernen, Oliventrester, Stroh und/oder Miscanthus besteht, die weniger als 15 Gew.-% des Biobrennstoffs darstellt.

7. Biobrennstoff nach einem der Ansprüche 1 bis 6, **dadurch gekennzeichnet, dass** die Pellets mit einem Öl überzogen sind, das ein Mittel gegen Flugstäube bildet.

8. Verfahren zur Herstellung eines Biobrennstoff, der als Pellets vorliegt, umfassend bis zu 30 Gew.-% Kohle und zwischen 60 und 70 Gew.-% eines Gemischs aus mindestens zwei landwirtschaftlicher Zwischenprodukte, die aus Sortier- und/oder Kalibrier- und/oder Siebvorgängen von Getreiden und/oder von Sonnenblume und/oder von Raps hervorgegangen sind, wobei die Zwischenprodukte Spelzengewebe, Spelzen, Schoten, Blätter, Stiele oder Spindeln sind, wobei das Verfahren **dadurch gekennzeichnet ist, dass** es vor dem Granulierschritt eine erste Mischphase, gefolgt von einem Zerkleinern und einer zweiten Mischphase, umfasst.

9. Verfahren nach Anspruch 8, **dadurch gekennzeichnet, dass** es nach dem Granulierschritt eine Kühlphase umfasst.

10. Verfahren nach Anspruch 8 oder Anspruch 9, **dadurch gekennzeichnet, dass** es eine Spritzphase eines Mittels gegen Flugstäube umfasst.

11. Verfahren nach Anspruch 10, **dadurch gekennzeichnet, dass** das Mittel gegen Flugstäube ein Öl ist.

12. Verfahren nach Anspruch 10 oder 11, **dadurch gekennzeichnet, dass** das Mittel gegen Flugstäube vor seiner Abkühlung auf die Pellets gespritzt wird.

## Claims

1. Biofuel, **characterised in that** it is in the form of pellets comprising up to 30% by weight of coal and between 60 and 70% by weight of a mixture of at least two middlings derived from the operations of sorting and/or grading and/or sieving of cereals and/or sunflower and/or rape, the middlings being glumes, glumes, siliques, leaves, stems or stalks.

2. The biofuel according to claim 1, **characterised in that** said pellets are cylindrical and between 10 and 40 mm in length.

3. The biofuel according to claim 2, **characterised in that** the pellets have a diameter of between 4 and 15 mm.

4. The biofuel according to any of claims 1 to 3, **characterised in that** the pellets have a density of between 350 and 650 Kg/m³.

5. The biofuel according to any of claims 1 to 4, **characterised in that** the pellets have a moisture content of between 5 and 15%.

6. The biofuel according to any one of claims 1 to 5, **characterized in that** it further comprises a vegetable biomass consisting of wood, seeds, olive pomace, straw, and/or miscanthus, representing less than 15% by weight of said biofuel.

7. The biofuel according to any one of claims 1 to 6, **characterised in that** the pellets are coated with an oil forming an anti-flying dust agent.

8. A method for the manufacture of a biofuel in the form of pellets comprising up to 30% by weight of coal and between 60 and 70% by weight of a mixture of at least two middlings derived from the operations of sorting and/or grading and/or sieving cereals and/or sunflower and/or rapeseed, the middlings being glumes, glumes, siliques, leaves, stems or stalks, the method being **characterised in that** it comprises, before the granulation stage, a first mixing phase, followed by grinding and a second mixing phase.

9. The method according to claim 8, **characterised in that** it comprises, after the granulation step, a cooling phase.

10. The method according to claim 8 or claim 9, **characterised in that** it comprises a phase of spraying an anti-flying dust agent.

11. The method according to claim 10, **characterised in that** the anti-flying dust agent is an oil.

12. The method according to claim 10 or 11, **characterised in that** the anti-flying dust agent is sprayed onto the pellets before they are cooled.
